# EUROPÄISCHE PATENTSCHRIFT

(11) **EP 0 675 171 B1**
(45) Veröffentlichungstag und Bekanntmachung des Hinweises auf die Patenterteilung: **09.09.1998**
(21) Anmeldenummer: 95810191.7
(22) Anmeldetag: 21.03.1995
(51) Int. Cl.: C09B 62/008, C09B 62/085, C09B 62/473

(54) **Reaktivfarbstoffe, Verfahren zu deren Herstellung und deren Verwendung**
Reactive dyes, process for their preparation and the use thereof
Colorants réactifs, procédé pour leur préparation et leur utilisation

(30) Priorität: 30.03.1994 CH 963/94
(43) Veröffentlichungstag der Anmeldung: 04.10.1995
(73) Patentinhaber: Ciba Specialty Chemicals Holding Inc., 4057 Basel (CH)
(72) Erfinder: Tzikas, Athanassios, Dr., CH-4133 Pratteln (CH); Deitz, Rolf, D-79400 Kandern (DE)

(56) Entgegenhaltungen:
- EP-A- 0 131 545
- JP-A-50 157 420
- E.SIEGEL 'The Chemistry of Synthetic Dyes, Band 6, I. Reactive Dyes: Reactive Groups' 1972 , K. VENKATARAMAN, ED.; ACADEMIC PRESS , NEW YORK, LONDON * Seite 130, Absatz B - Seite 134 *

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die einen hohen Ziehgrad haben und die zugleich Färbungen mit hohen Fixiergraden liefern. Weiterhin sollen die mit den Reaktivfarbstoffen erhaltenen Färbungen eine gute Faseregalität aufweisen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen. Sie sollten ferner Färbungen mit guten Allgemeinechtheiten, beispielsweise Licht- und Nassechtheiten, ergeben.

Es hat sich gezeigt, dass mit den weiter unten definierten neuen reaktiven Farbstoffen die gestellte Aufgabe weitgehend gelöst wird.

Gegenstand der Erfindung sind daher Reaktivfarbstoffe der Formel 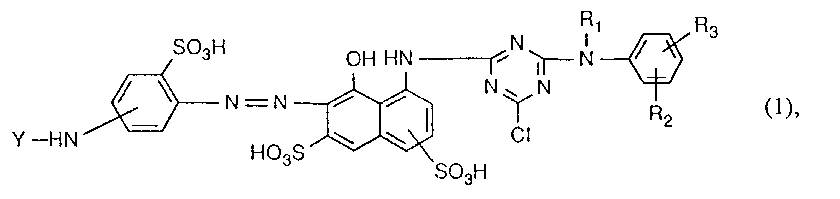 worin
R₁ gegebenenfalls durch Hydroxyl substituiertes C₁-C₄-Alkyl ist,
R₂ und R₃ unabhängig voneinander Wasserstoff, C₁-C₄-Alkyl, C₁-C₄-Alkoxy,
C₂-C₄-Alkanoylamino, oder Halogen sind und
Y α,β-Dihalogenpropionyl oder α-Halogenacryloyl bedeutet.

Aus der JP-A-50157420 sind Farbstoffe bekannt, welche sich von den erfindungsgemässen Farbstoffen hinsichtlich des Phenylaminosubstituenten unterscheiden.

In der EP-A-0131545 werden Farbstoffe offenbart, welche im Unterschied zu den erfindungsgemässen Farbstoffen einen Fluortriazinrest enthalten.

Als C₁-C₄-Alkyl kommen für R₁, R₂ und R₃ Methyl, Aethyl, Propyl, Isopropyl, Butyl, Isobutyl, sek.-Butyl oder tert.-Butyl, insbesondere Methyl oder Äthyl, in Betracht.

Als C₁-C₄-Alkoxy kommen für R₂ und R₃ beispielsweise Methoxy, Aethoxy, Propoxy, Isopropoxy, Butoxy, sek.-Butoxy, Isobutoxy oder tert.-Butoxy, insbesondere Methoxy oder Äthoxy, in Betracht.

Als C₂-C₄-Alkanoylamino kommen für R₂ und R₃ beispielsweise Acetylamino, Propionylamino oder Butyrylamino, insbesondere Acetylamino, in Betracht.

Als Halogen kommen für R₂ und R₃ beispielsweise Fluor oder Brom und insbesondere Chlor in Betracht.

Vorzugsweise bedeutet R₁ C₁-C₄-Alkyl. Bevorzugt bedeutet R₁ Methyl oder Aethyl, insbesondere Aethyl.

R₂ und R₃ sind unabhängig voneinander Wasserstoff, C₁-C₄-Alkyl, C₁-C₄-Alkoxy, C₂-C₄-Alkanoylamino oder Halogen. Besonders bevorzugt sind R₂ und R₃ Wasserstoff.

Der Rest Y ist bevorzugt α,β-Dibrompropionyl, α,β-Dichlorpropionyl, α-Bromacryloyl oder α-Chloracryloyl, insbesondere α,β-Dibrompropionyl oder α-Bromacryloyl.

Bevorzugt sind Reaktivfarbstoffe der Formel (1), worin R₁ Methyl oder Aethyl, R₂ und R₃ Wasserstoff und Y α,β-Dibrompropionyl, α,β-Dichlorpropionyl, α-Bromacryloyl oder α-Chloracryloyl, insbesondere α,β-Dibrompropionyl oder α-Bromacryloyl, ist.

Von besonderem Interesse sind Reaktivfarbstoffe der Formel (1), worin der Rest -NH-Y in meta-Stellung, relativ zur Azobrücke, gebunden ist.

Besonders bevorzugt sind die Reaktivfarbstoffe der Formeln 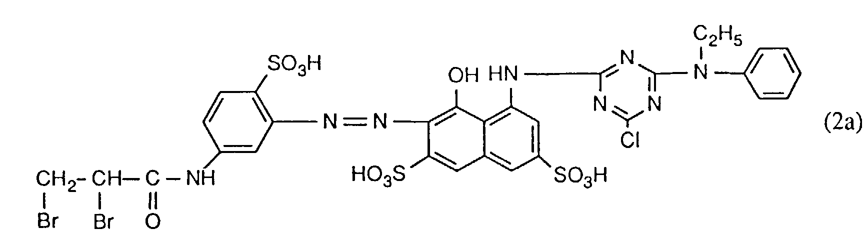 und 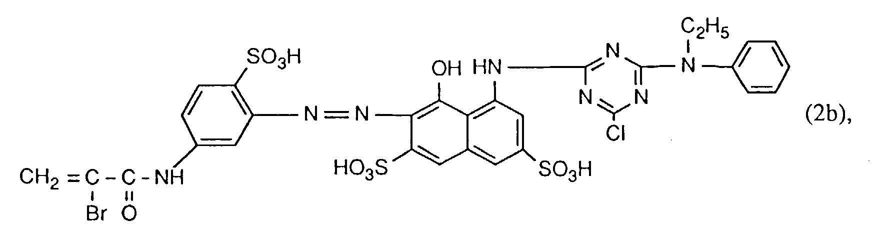 insbesondere der Reaktivfarbstoff der Formel (2a).

Weiterhin besonders bevorzugt sind die Reaktivfarbstoffe der Formeln 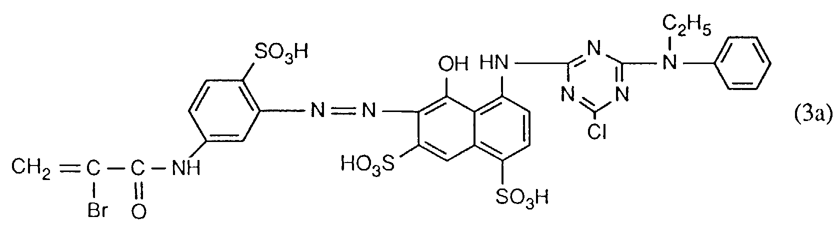 und 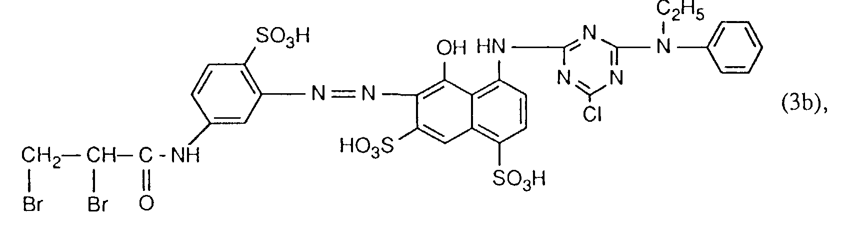 insbesondere der Reaktivfarbstoff der Formel (3a).

Gegenstand der Erfindung ist ferner ein Verfahren zur Herstellung der Reaktivfarbstoffe der Formel (1), welches dadurch gekennzeichnet ist, dass man ein Amin der Formel 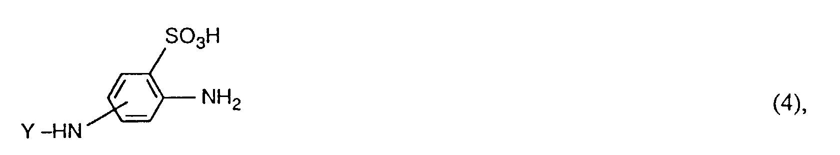 worin
Y die unter Formel (1) angegebenen Bedeutungen hat,
   diazotiert und auf eine Verbindung der Formel 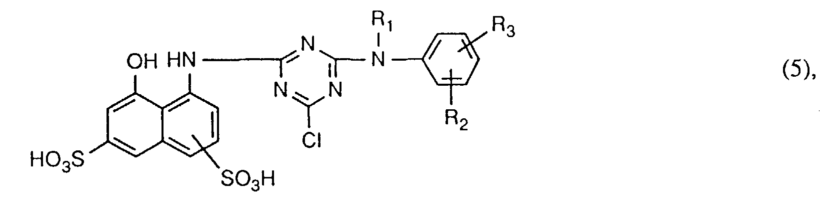 worin R₁, R₂ und R₃ die unter Formel (1) angegebenen Bedeutungen haben, kuppelt und gegebenenfalls den Rest Y in der Bedeutung als α,β-Dihalogenpropionylrest in den α-Halogenacryloylrest umwandelt.

Die Diazotierung und Kupplung erfolgt in an sich bekannter Weise. So erfolgt die Diazotierung des Amins der Formel (4) in der Regel durch Einwirken salpetriger Säure in wässrig-mineralsaurer Lösung bei tiefer Temperatur, wie z.B. 0 bis 20°C, die Kupplung auf die Kupplungskomponente der Formel (5) bei sauren bis neutralen pH-Werten, insbesondere bei einem pH-Wert von 2 bis 6.

Falls es sich bei dem Rest Y um einen α,β-Dihalogenpropionylrest handelt, so kann dieser anschliessend noch in den α-Halogenacryloylrest umgewandelt werden. Diese Umwandlungsreaktion erfolgt in der Regel in neutralem bis alkalischem Medium bei einer Temperatur von z.B. 20 bis 70°C, bei einem pH-Wert von z.B. 6 bis 14. Die Einstellung des pH-Wertes kann hierbei z.B. mittels Natriumhydroxid erfolgen.

In dem erfindungsgemässen Verfahren zur Herstellung der Reaktivfarbstoffe der Formel (1) gelten für die Substituenten der Verbindungen der Formeln (4) und (5) die zuvor angegebenen Bedeutungen und Bevorzugungen.

Die Verbindungen der Formeln (4) und (5) sind bekannt oder können in Analogie zu bekannten Verfahren hergestellt werden.

So können Verbindungen der Formel (5) erhalten werden, indem man eine Verbindung der Formel 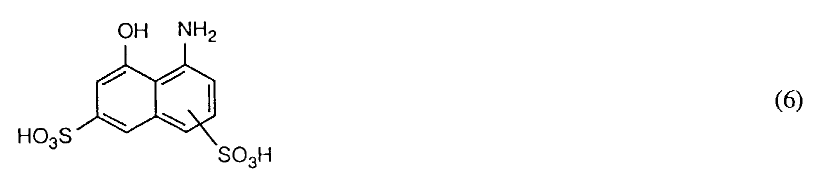 mit Cyanurchlorid kondensiert und das erhaltene Kondensationsprodukt mit einer Verbindung der Formel 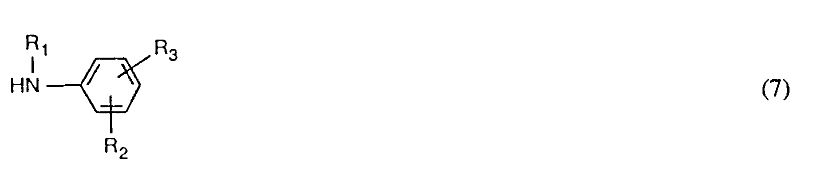 kondensiert, wobei R₁, R₂ und R₃ die unter Formel (1) angegebenen Bedeutungen haben.

Die Kondensationen erfolgen in an sich bekannter Weise, wie z.B. in wässriger Lösung, bei einer Temperatur von beispielsweise 0 bis 40°C und einem pH-Wert von z.B. 1 bis 6. Die Kondensation der Verbindung der Formel (6) mit Cyanurchlorid erfolgt vorzugsweise bei einer Temperatur von 0 bis 10°C und einem pH-Wert von 1 bis 3. Die Kondensation des erhaltenen Kondensationsprodukts mit der Verbindung der Formel (7) erfolgt vorzugsweise bei einer Temperatur von 0 bis 30°C und einem pH-Wert von 4 bis 6.

Die Reaktivfarbstoffe der Formel (1) liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die Reaktivfarbstoffe der Formel (1) eignen sich zum Färben oder Bedrucken von stickstoffhaltigen oder hydroxylgruppenhaltigen Fasermaterialien, insbesondere von natürlichen Polyamidfasermaterialien, wie z.B. Wolle, sowie von synthetischen Polyamidfasermaterialien, wie z.B. Polyamid 6 oder Polyamid 6.6, und sind geeignet zum Färben oder Bedrucken von Woll- und synthetischen Polyamid-Mischgeweben oder -Garnen. Das genannte Textilmaterial kann dabei in den verschiedensten Verarbeitungsformen vorliegen, wie z.B. als Faser, Garn, Gewebe oder Gewirke.

Die Reaktivfarbstoffe der Formel (1) können zum Färben oder Bedrucken gemäss den üblichen Färbe- bzw. Druckverfahren verwendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Die Reaktivfarbstoffe der Formel (1) ergeben egale Färbungen mit guten Allgemeinechtheiten, insbesondere guter Reib-, Nass-, Nassreib- und Lichtechtheit. Ferner zeichnen sie sich durch gleichmässigen Farbaufbau, ein gutes Aufziehvermögen, hohe Reaktivität, gutes Fixiervermögen, ein sehr gutes Aufbauvermögen und gute Kombinierbarkeit mit anderen Farbstoffen aus.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: 24 Teile 2-(α,β-Dibrompropionylamino)-anilin-5-sulfonsäure werden bei einer Temperatur von ca. 20°C in 176 Teilen Wasser unter Zugabe von 7 Teilen Natriumchlorid suspendiert und auf einen pH-Wert von 4,4 gestellt. Die so erhaltene Suspension wird dann durch Zugabe von 13,5 Teilen Salzsäure (32%) und 15 Teilen 4-normaler Natriumnitritlösung diazotiert. Nach ca. 4 Stunden wird überschüssiges Nitrit mit Sulfaminsäure zerstört.

Die wie oben angegeben erhaltene Suspension der Diazokomponente wird auf eine Temperatur von ca. 10°C und auf einen pH-Wert von 5 gestellt und zu einer Lösung, welche 30 Teile der in Form der freien Säure der Formel 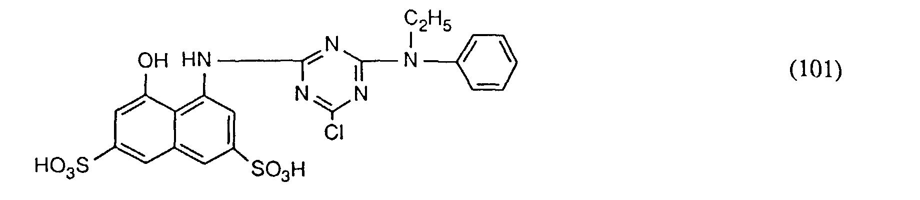 entsprechenden Verbindung in 280 Teilen Wasser enthält und auf einen pH-Wert von 5 gestellt ist, innerhalb von ca. 30 Minuten zulaufengelassen. Hierbei wird der pH durch Zugabe von wässriger Natriumhydroxidlösung bei einem Wert von 5 gehalten. Anschliessend wird die Reaktionslösung bei Raumtemperatur gerührt, bis kein Diazoniumsalz mehr nachweisbar ist, und das Produkt durch Zugabe von Natriumchlorid ausgesalzen. Nach Filtration, Nachwaschen mit wässriger Natriumchloridlösung und Trocknung erhält man einen Farbstoff, der in Form der freien Säure der Verbindung der Formel 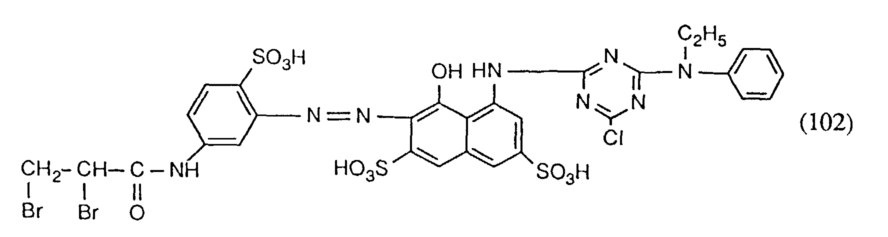 entspricht. Der Farbstoff der Formel (102) färbt Wolle und Polyamid in roten Farbtönen.

Beispiel 2: 24 Teile 2-(α,β-Dibrompropionylamino)-anilin-5-sulfonsäure werden bei einer Temperatur von ca. 20°C in 176 Teilen Wasser unter Zugabe von 7 Teilen Natriumchlorid suspendiert und auf einen pH-Wert von 4,4 gestellt. Die so erhaltene Suspension wird dann durch Zugabe von 13,5 Teilen Salzsäure (32%) und 15 Teilen 4-normaler Natriumnitritlösung diazotiert. Nach ca. 4 Stunden wird überschüssiges Nitrit mit Sulfaminsäure zerstört.

Die wie oben angegeben erhaltene Suspension der Diazokomponente wird auf eine Temperatur von ca. 10°C und auf einen pH-Wert von 5 gestellt und zu einer Lösung, welche 30 Teile der in Form der freien Säure der Formel 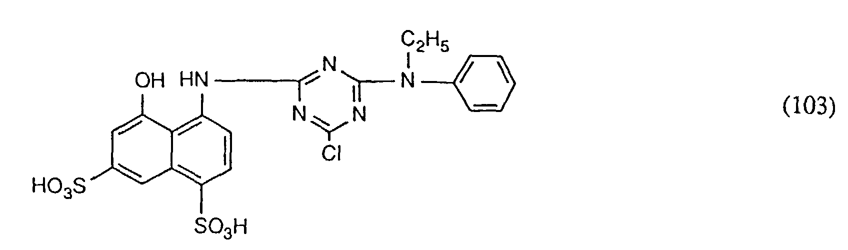 entsprechenden Verbindung in 280 Teilen Wasser enthält und auf einen pH-Wert von 5 gestellt ist, innerhalb von ca. 30 Minuten zulaufengelassen. Hierbei wird der pH durch Zugabe von wässriger Natriumhydroxidlösung bei einem Wert von 5 gehalten. Anschliessend wird die Reaktionslösung bei Raumtemperatur gerührt, bis kein Diazoniumsalz mehr nachweisbar ist. Nun wird das Reaktionsgemisch zwecks Acrylierung des erhaltenen Produkts auf eine Temperatur von ca. 30°C erwärmt und durch Zugabe wässriger Natriumhydroxidlösung auf einen pH-Wert von 11 gestellt. Nach ca. 30 Minuten wird der pH auf einen Wert von 6,5 gestellt und das Produkt durch Zugabe von Natriumchlorid ausgesalzen. Nach Filtration, Nachwaschen mit wässriger Natriumchloridlösung und Trocknung erhält man einen Farbstoff, der in Form der freien Säure der Verbindung der Formel 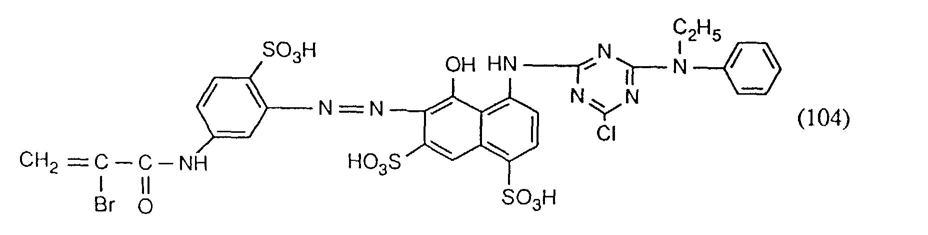 entspricht. Der Farbstoff der Formel (104) färbt Wolle und Polyamid in roten Farbtönen.

Beispiele 3 bis 5: In analoger Weise zu den Angaben in Beispiel 1 können die Farbstoffe der Formeln 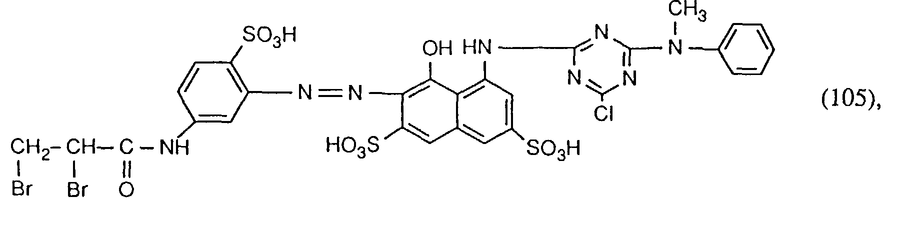 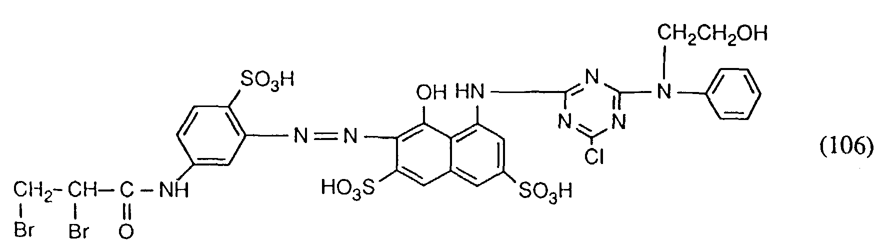 und 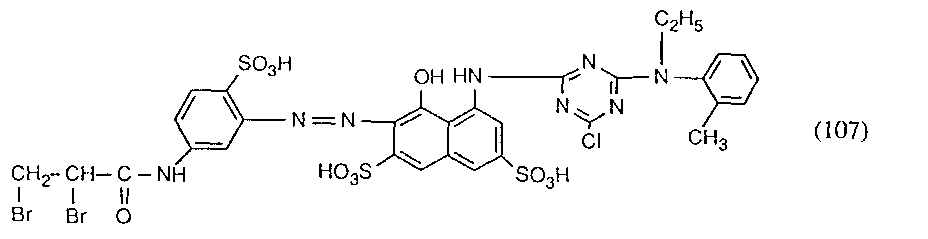 erhalten werden. Die Farbstoffe der Formel (105), (106) und (107) färben Wolle und Polyamid in roten Farbtönen.

### Färbevorschrift

Es werden 0,1 Teile des Farbstoffs gemäss Beispiel 1 in 200 Teilen Wasser gelöst und 0,5 Teile Natriumsulfat, 0,1 Teile eines Egalisierhilfsmittels (basierend auf dem Kondensationsprodukt aus einem höheren aliphatischen Amin und Ethylenoxid) sowie 0,5 Teile Natriumacetat zugegeben. Dann wird der pH mit Essigsäure (80%) auf einen Wert von 5,5 gestellt. Das Färbebad wird 10 Minuten auf 50°C erwärmt und es werden dann 10 Teile eines Wollgewebes zugegeben. Man erwärmt innerhalb von ca. 50 Minuten auf eine Temperatur von 100°C und färbt 60 Minuten bei dieser Temperatur. Danach lässt man auf 90°C abkühlen und entnimmt das Färbegut. Das Wollgewebe wird mit warmem und kaltem Wasser gewaschen, anschliessend geschleudert und getrocknet. Man erhält eine rote Färbung, die gute Licht- und Nassechtheiten sowie eine gute Faseregalität aufweist.

## Patentansprüche

1. Reaktivfarbstoffe der Formel 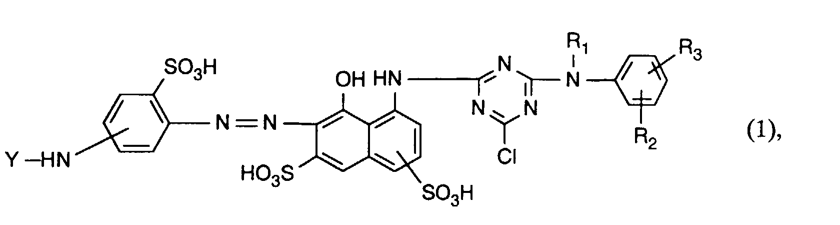 worin
R₁ gegebenenfalls durch Hydroxyl substituiertes C₁-C₄-Alkyl ist,
R₂ und R₃ unabhängig voneinander Wasserstoff, C₁-C₄-Alkyl, C₁-C₄-Alkoxy,
C₂-C₄-Alkanoylamino, oder Halogen sind und
Y α,β-Dihalogenpropionyl oder α-Halogenacryloyl bedeutet.

2. Reaktivfarbstoffe gemäss Anspruch 1, worin R₁ Methyl oder Aethyl ist.

3. Reaktivfarbstoffe gemäss Anspruch 1, worin R₁ Aethyl ist.

4. Reaktivfarbstoffe gemäss einem der Ansprüche 1 bis 3, worin R₂ und R₃ Wasserstoff sind.

5. Reaktivfarbstoffe gemäss einem der Ansprüche 1 bis 4, worin Y α,β-Dibrompropionyl, α,β-Dichlorpropionyl, α-Bromacryloyl oder α-Chloracryloyl ist.

6. Reaktivfarbstoffe gemäss einem der Ansprüche 1 bis 4, worin Y α,β-Dibrompropionyl oder α-Bromacryloyl ist.

7. Reaktivfarbstoffe gemäss Anspruch 1, worin R₁ Methyl oder Aethyl, R₂ und R₃ Wasserstoff und Y α,β-Dibrompropionyl oder α-Bromacryloyl ist.

8. Reaktivfarbstoffe gemäss Anspruch 1 der Formeln 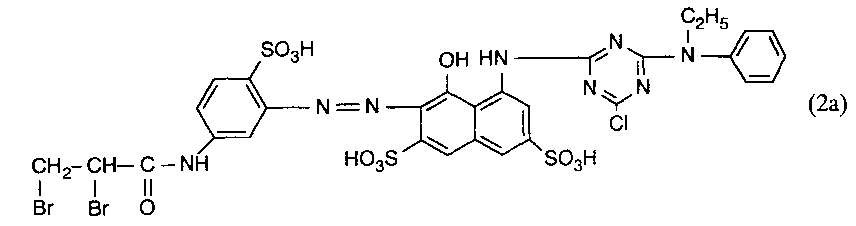 und

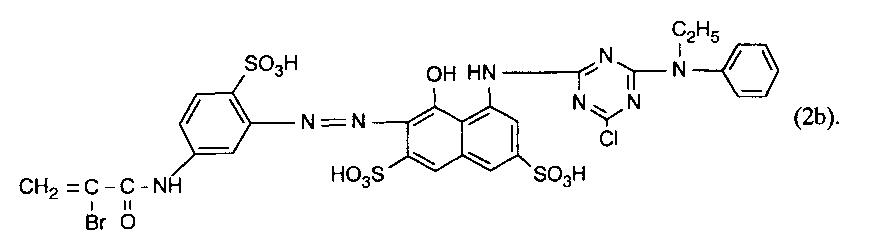

9. Reaktivfarbstoffe gemäss Anspruch 1 der Formeln 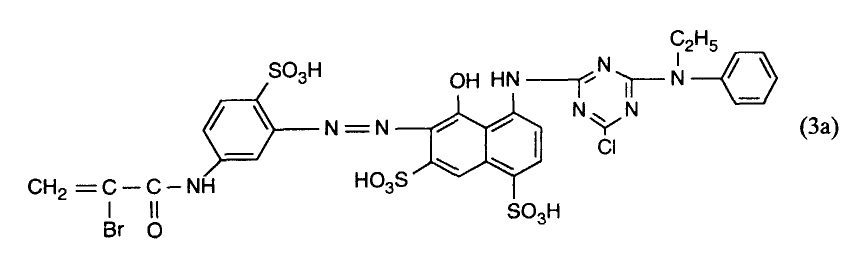 und

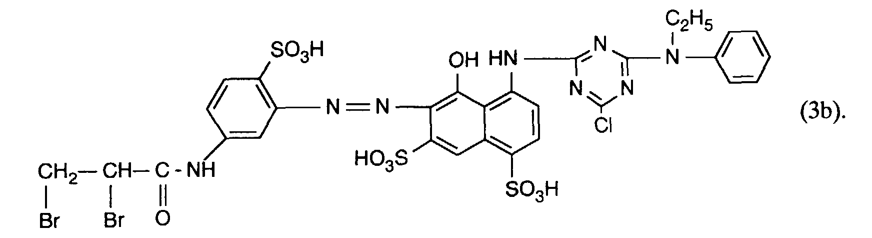

10. Verfahren zur Herstellung von Reaktivfarbstoffen gemäss Anspruch 1, dadurch gekennzeichnet, dass man ein Amin der Formel 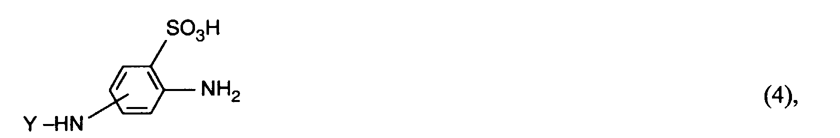
worin Y die in Anspruch 1 angegebenen Bedeutungen hat,
diazotiert und auf eine Verbindung der Formel 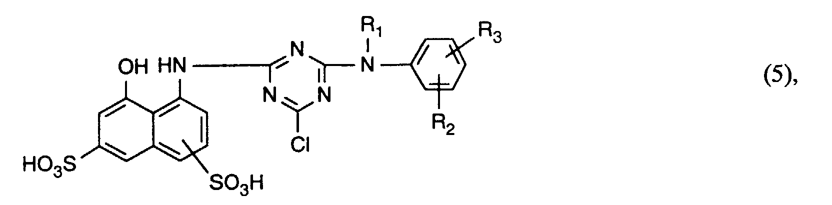 worin R₁, R₂ und R₃ die in Anspruch 1 angegebenen Bedeutungen haben, kuppelt und gegebenenfalls den Rest Y in der Bedeutung als α,β-Dihalogenpropionylrest in den α-Halogenacryloylrest umwandelt.

11. Verwendung der Reaktivfarbstoffe gemäss einem der Ansprüche 1 bis 10 bzw. der gemäss Anspruch 11 erhaltenen Reaktivfarbstoffe zum Färben oder Bedrucken von hydroxylgruppenhaltigem oder stickstoffhaltigem Fasermaterial.

12. Verwendung gemäss Anspruch 11 zum Färben oder Bedrucken von natürlichem oder synthetischem Polyamidfasermaterial, insbesondere von Wolle.

## Claims

1. A reactive dye of formula 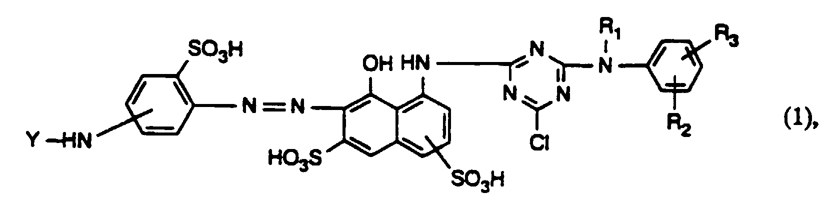 wherein
R₁ is C₁-C₄alkyl which is unsubstituted or substituted by hydroxyl,
R₂ and R₃ are each independently of the other hydrogen, C₁-C₄alkyl, C₁-C₄alkoxy, C₂-C₄alkanoylamino or halogen and
Y is α,β-dihalopropionyl or α-haloacryloyl.

2. A reactive dye according to claim 1, wherein R₁ is methyl or ethyl.

3. A reactive dye according to claim 1, wherein R₁ is ethyl.

4. A reactive dye according to any one of claims 1 to 3, wherein R₂ and R₃ are hydrogen.

5. A reactive dye according to any one of claims 1 to 4, wherein Y is α,β-dibromopropionyl, α,β-dichloropropionyl, α-bromoacryloyl or α-chloroacryloyl.

6. A reactive dye according to any one of claims 1 to 4, wherein Y is α,β-dibromopropionyl or α-bromoacryloyl.

7. A reactive dye according to claim 1, wherein R₁ is methyl or ethyl, R₂ and R₃ are hydrogen and Y is α,β-dibromopropionyl or α-bromoacryloyl.

8. A reactive dye according to claim 1, of formula 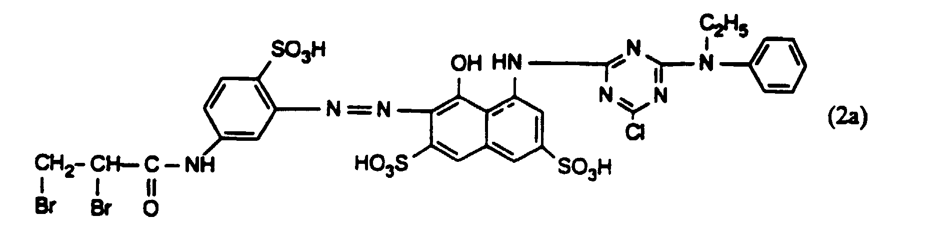 or

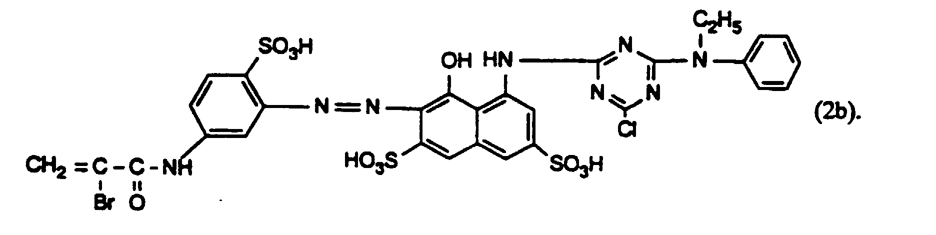

9. A reactive dye according to claim 1, of formula 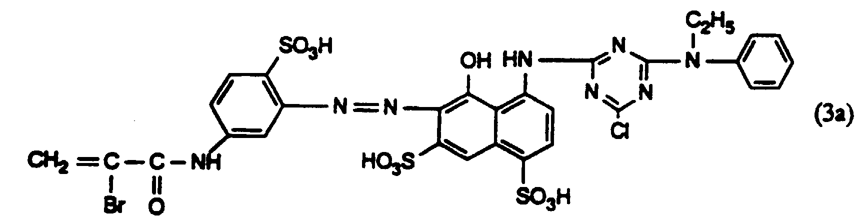 or

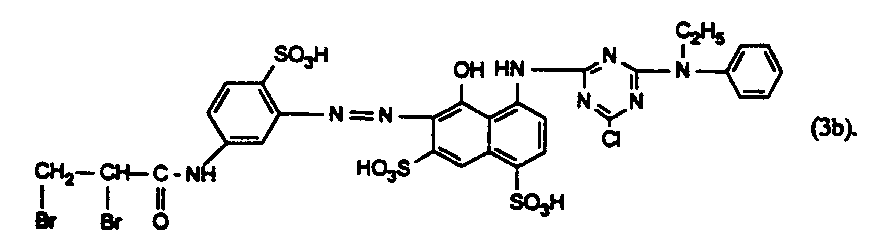

10. A process for the preparation of a reactive dye according to claim 1, which comprises diazotising an amine of formula 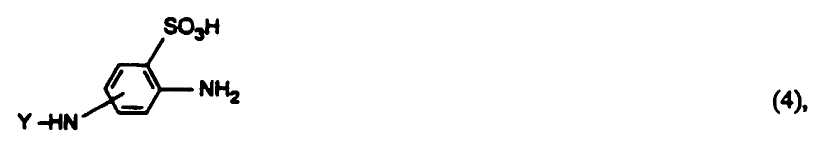 wherein
Y has the meanings indicated in claim 1,
and coupling the diazonium salt so obtained to a compound of formula 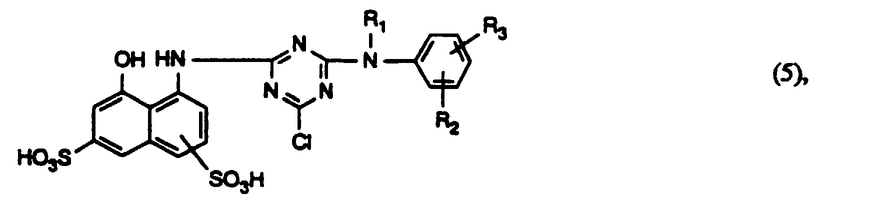 wherein R₁, R₂ and R₃ have the meanings indicated in claim 1, and, if desired, converting Y as a α,β-dihalopropionyl radical into the α-haloacryloyl radical.

11. Use of a reactive dye according to any one of claims 1 to 9, or of a reactive dye obtained according to claim 10, for dyeing or printing hydroxyl group-containing or nitrogen-containing fibre material.

12. Use according to claim 11 for dyeing or printing natural or synthetic polyamide fibre material, in particular wool.

## Revendications

1. Colorants réactifs de formule 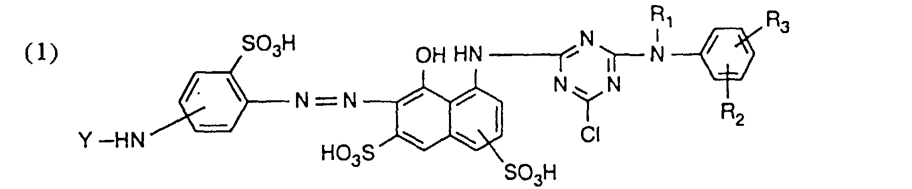 dans laquelle
R₁ représente un résidu alkyle en C₁₋₄ éventuellement hydrqxylé,
R₂ et R₃ représentent, indépendamment l'un de l'autre, un atome d'hydrogène, un groupe alkyle en C₁₋₄, alcoxy en C₁₋₄, alcanoylamino en C₂₋₄ ou halogéno et
Y représente un résidu α,β-dihalogénopropionyle ou α-halogénoacryloyle.

2. Colorants réactifs selon la revendication 1, dans lesquels R₁ est un groupe méthyle ou éthyle.

3. Colorants réactifs selon la revendication 1, dans lesquels R₁ est un groupe éthyle.

4. Colorants réactifs selon l'une des revendications 1 à 3, dans lesquels R₂ et R₃ représentent chacun un atome d'hydrogène.

5. Colorants réactifs selon l'une des revendications 1 à 4, dans lesquels Y représente un résidu α,β-dibromopropionyle, α,β-dichloropropionyle, α-bromoacryloyle ou α-chloroacryloyle.

6. Colorants réactifs selon l'une des revendications 1 à 4, dans lesquels Y est un résidu α,β-dibromopropionyle ou a-bromoacryloyle.

7. Colorants réactifs selon la revendication 1, dans lesquels R₁ est un groupe méthyle ou éthyle, R₂ et R₃ est un atome d'hydrogène et Y est un groupe α,β-dibromopropionyle ou α-bromoacryloyle.

8. Colorants réactifs selon la revendication 1 de formule 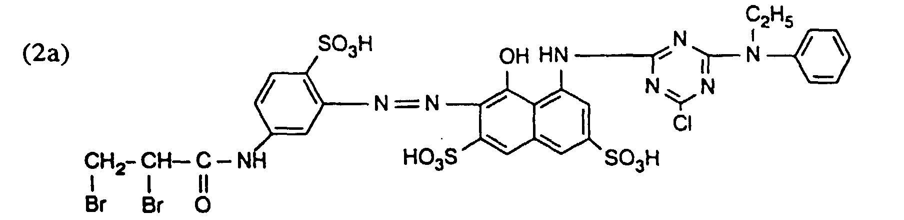 et

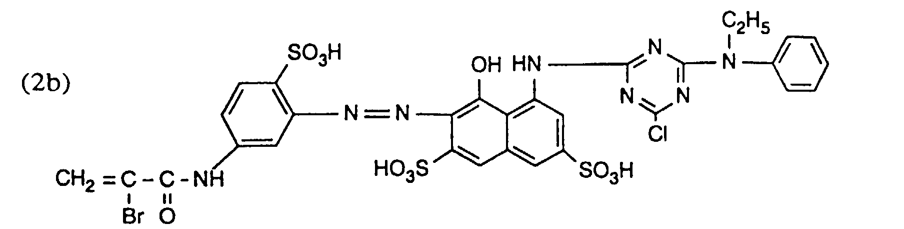

9. Colorants réactifs selon la revendication 1 de formule 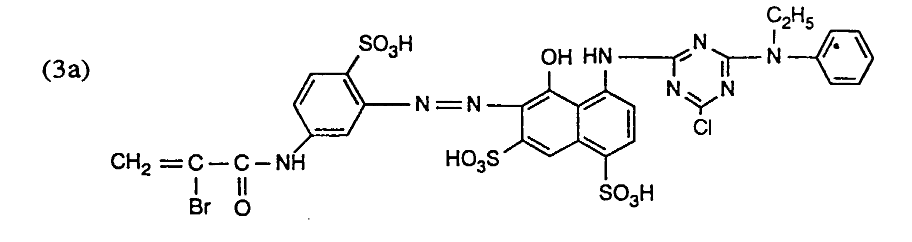 et

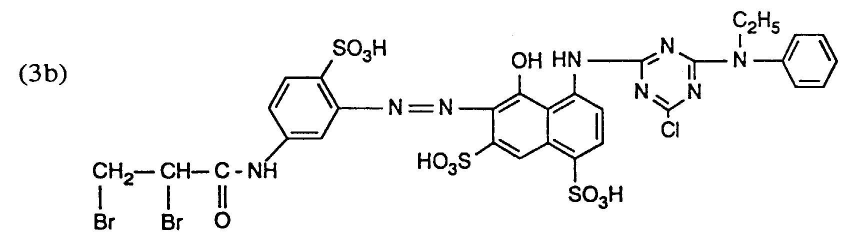

10. Procédé de préparation de colorants réactifs selon la revendication 1, caractérisé en ce que l'on effectue la diazotation d'une amine de formule 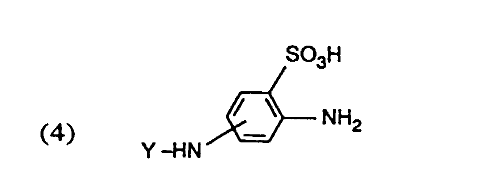 dans laquelle
Y a la signification indiquée dans la revendication 1, en ce que l'on copule l'amine diazotée avec un composé de formule 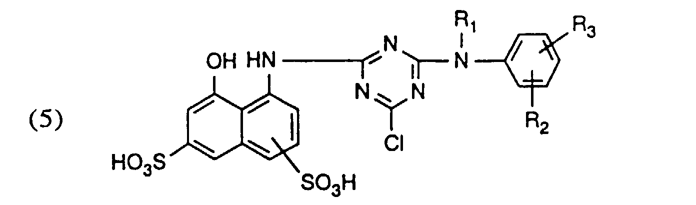 dans laquelle R₁, R₂ et R₃ ont la signification indiquée dans la revendication 1, et en ce que l'on convertit éventuellement le résidu Y, lorsqu'il s'agit d'un radical α,β-dihalogénopropionyle, en un résidu α-halogénoacryloyle.

11. Utilisation des colorants réactifs selon l'une des revendications 1 à 9 ou obtenus selon la revendication 10 pour la teinture ou l'impression de matériaux fibreux contenant des groupes hydroxyle ou des atomes d'azote.

12. Utilisation selon la revendication 11 pour la teinture ou l'impression de matériaux fibreux en polyamide naturel ou synthétique, en particulier de laine.
